# DEMANDE DE BREVET EUROPEEN

(11) **EP 0 984 308 A1**
(43) Date de publication de la demande: **08.03.2000**
(21) Numéro de dépôt: 99402056.8
(22) Date de dépôt: 13.08.1999
(51) Int. Cl.: G02B 6/16

(54) **Fibre optique monomode à dispersion décalée comprenant un anneau exterieur de l'indice de réfraction**

(30) Priorité: 13.08.1998 FR 9810382
(71) Demandeur: ALCATEL, 75008 Paris (FR)
(72) Inventeur: Paillot, Marianne, 95350 Saint Brice sous Foret (FR); Rousseau, Jean Claude, 78400 Chatou (FR)
(74) Mandataire: Doressamy, Clarisse

(57) **Abrégé**

L'invention concerne une fibre optique monomode à dispersion décalée. présentant
- une gaine avec un indice (nₛ) donné,
- un coeur de fibre présentant un profil d'indice en gaussienne avec piédestal,
caractérisée en ce que le profil d'indice du coeur de fibre présente un anneau externe d'indice (n₃) supérieur à celui de la gaine (nₛ).

L'invention permet de mieux contrôler la valeur de la longueur d'onde pour laquelle la dispersion chromatique est nulle, en conservant les autres caractéristiques de transmission des fibres connues, comme le diamètre de mode (surface effective importante) et l'atténuation.

## Description

La présente invention a pour objet une fibre optique monomode à dispersion décalée.

Les fibres optiques monomodes dites à dispersion décalée (DSF ou "dispersion shifted fibers") sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique de l'onde transmise est sensiblement nulle; c'est à dire que la dispersion chromatique de la silice, non nulle, est compensée - d'où l'emploi du terme décalé- par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la fibre, lors de la fabrication de celle-ci, par exemple par un processus de MCVD connu en soi, et qui n'est pas décrit plus en détail ici. Une valeur typique pour la différence d'indice entre la gaine et le coeur de la fibre est 24.10⁻³; l'augmentation de l'indice dans la silice peut être obtenu en utilisant comme dopant du germanium. Les termes de gaine et de coeur sont connus de l'homme du métier; classiquement on appelle gaine la partie qui s'étend jusqu'à un diamètre de 125 µm. Le coeur correspond à la partie où environ 70% de l'énergie lumineuse se propage.

Ces fibres monomodes doivent en outre présenter de préférence des caractéristiques qui correspondent aux exigences des câbliers et des systémiers: d'une part des diamètres de mode faibles; et une bonne "câblabilité", se traduisant par une capacité de courbure de la fibre, et une faible atténuation; d'autre part, un diamètre de mode aussi grand que possible, une aire effective importante, une valeur appropriée de la longueur d'onde λ₀ de dispersion nulle. L'utilisation de ces fibres pour des systèmes de transmission à multiplexage de longueurs d'onde rend les contraintes encore plus sévères.

Il serait préférable d'utiliser de la fibre ayant une valeur de λ₀ supérieure ou égale à 1565 nm et avantageusement supérieure ou égale à 1585 nm, pour éviter l'emploi de fibre à compensation de dispersion (DCF ou "dispersion compensating fiber"), laquelle présente l'inconvénient de favoriser les effets non linéaires, d'être fortement atténuante et difficilement câblable. Toutefois, les fibres existantes présentant de telles valeurs de λ₀ ont une surface effective faible, ou encore une atténuation forte autour de 1550 nm.

De nombreux profils d'indice ont été proposés pour de telles fibres optiques monomodes à dispersion décalée. Le profil d'indice est généralement qualifié en fonction de l'allure de la courbe représentative de l'indice en fonction du rayon de la fibre. On parle ainsi de profil d'indice en "échelon", en "trapèze" ou en "triangle" pour des courbes représentatives de la variation de l'indice en fonction du rayon qui présentent des formes respectives d'échelon. de trapèze ou de triangle. Ces courbes sont généralement représentatives du profil théorique ou de consigne de la fibre, les contraintes de fabrication de la fibre pouvant conduire à un profil sensiblement différent.

Les premières fibres optiques à dispersion décalée étaient du type à saut d'indice, triangle, gaussienne ou puissance α. Les caractéristiques de ces fibres ne sont plus considérées comme suffisantes, notamment du fait d'un faible diamètre de mode et de leur sensibilité aux courbures, et ceci bien que ces fibres présentent des valeurs d'atténuation inférieures à 0,20 dB/km à 1550 nm. Une nouvelle famille de fibres a donc été développée: des fibres à profil d'indice en gaussienne avec piédestal, ou "dual shape core".

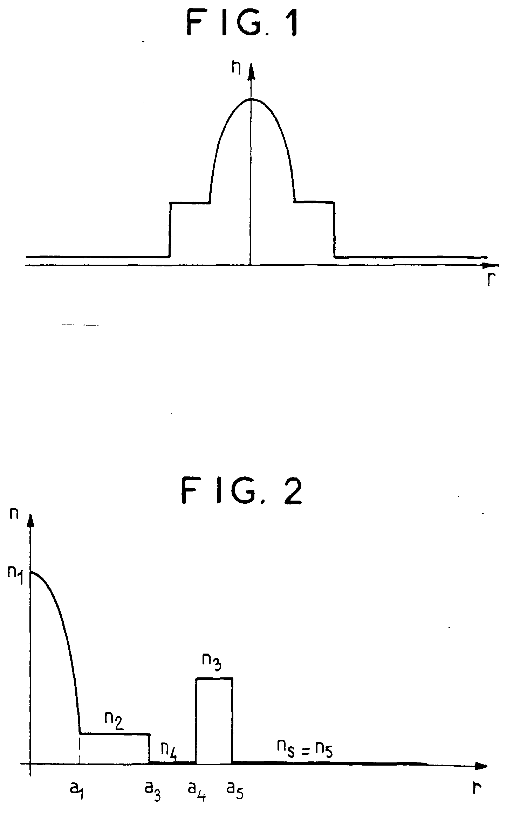

Ainsi, la demande de brevet EP-A-0 789 257 décrit une fibre avec un profil d'indice en gaussienne avec piédestal. Le profil de cette fibre est représenté à la figure 1. Cette fibre présente un diamètre de mode de 9 µm, et une longueur d'onde λ₀ de l'ordre de 1582 nm.

Le brevet US-A-5 278 931 décrit une fibre optique présentant une sensibilité à la courbure améliorée, avec une région de coeur présentant un indice supérieur à celui du reste de la fibre, et une queue de diffusion réduite à l'interface entre le coeur de la gaine. Ce document suggère la présence optionnelle d'un anneau autour de la partie du coeur présentant un indice supérieur à celui de la gaine. Le brevet US-A-4 641 917 contient un enseignement similaire, suggérant la présence d'un anneau d'indice plus élevé choisi de façon appropriée pour abaisser la longueur d'onde de coupure ou pour obtenir une fibre moins sensible aux courbures.

Ces différentes solutions connues ne permettent pas, tout en conservant les caractéristiques adaptées à une bonne câblabilité, d'obtenir une valeur de longueur d'onde λ₀ élevée, ou qui puisse être choisie librement.

L'invention propose une solution qui permet de maintenir une surface effective A_{ef} importante, typiquement au delà de 70 µm²; ceci limite les effets non-linéaires. La fibre selon l'invention permet aussi d'obtenir une atténuation faible, de préférence inférieure ou égale à 0,2 dB/km. Elle permet en outre d'obtenir, pour tous ces paramètres, une longueur d'onde λ₀ de dispersion chromatique nulle avantageusement supérieure ou égale à 1585 nm; ce qui permet d'éviter ou de limiter, si la fibre est utilisée pour des transmissions en multiplexage de longueurs d'onde, le mélange quatre ondes et l'emploi de fibres à compensation de dispersion.

En d'autres termes, l'invention propose un procédé pour augmenter la valeur λ₀ de la longueur d'onde pour laquelle la dispersion chromatique s'annule dans une fibre optique monomode à dispersion décalée, présentant une gaine avec un indice (nₛ) donné, un coeur de fibre avec un profil d'indice en gaussienne avec piédestal. et un diamètre de mode avantageusement supérieur ou égal à 8 µm, comprenant l'ajout dans le profil d'indice du coeur de fibre d'une partie annulaire externe d'indice supérieur à celui de la gaine.

L'invention concerne ainsi une fibre optique monomode à dispersion décalée, présentant
- une gaine avec un indice donné,
- un coeur de fibre présentant un profil d'indice en gaussienne avec piédestal,
caractérisée en ce que le profil d'indice du coeur de fibre présente un anneau externe d'indice supérieur à celui de la gaine.

Avantageusement, l'indice dudit anneau est supérieur ou égal à celui du piédestal, et, de préférence, l'indice dudit anneau est compris entre 1 et 6. 10⁻³.

Dans un mode de réalisation, ledit anneau présente une épaisseur comprise entre 0,3 et 0,8 fois le rayon de la partie du coeur en gaussienne.

Dans un mode de réalisation, l'indice le plus élevé de la partie du coeur en gaussienne est généralement supérieur ou égal à 9,5. 10⁻³.

De préférence, l'indice dudit piédestal est supérieur à celui de la gaine.

Dans un mode de réalisation, l'indice dudit piédestal est généralement compris entre 1 et 3. 10⁻³.

Dans un autre mode de réalisation, l'indice entre ledit piédestal et ledit anneau est inférieur ou égal à celui de la gaine. Un tel indice est généralement compris entre 0 et -0,5. 10⁻³.

Avantageusement, la partie de la fibre entre ledit piédestal et ledit anneau présente une épaisseur comprise entre 0,3 et 0,8 fois le rayon de la partie du coeur en gaussienne

La fibre peut aussi présenter entre ledit anneau externe et la gaine une partie annulaire d'indice inférieur ou égal à l'indice dudit anneau externe et à l'indice de la gaine. Un tel indice est généralement compris entre 0 et -0,5. 10⁻³.

La fibre selon l'invention est généralement et de préférence telle que la valeur de la longueur d'onde pour laquelle la dispersion chromatique s'annule est avantageusement supérieure ou égale à 1565 nm, de préférence supérieure ou égale à 1585 nm.

Avantageusement, ladite fibre présente une surface effective supérieure ou égale à 70 µm².

De préférence, elle présente une atténuation inférieure ou égale à 0,2 dB/km pour une valeur de longueur d'onde de 1550 nm.

L'invention propose donc d'ajouter un anneau sur les profils de fibre existant, du type gaussienne avec piédestal. Elle permet de conserver une faible atténuation, une surface effective importante, tout en obtenant des valeurs de λ₀ élevées, typiquement supérieures ou égales à 1565 nm, avantageusement supérieures ou égales à 1585 nm.

L'invention permet généralement d'obtenir pour la fibre une longueur d'onde λ₀ d'au moins 1565 nm et de préférence d'au moins 1585 nm, et les caractéristiques suivantes:
- une surface efficace supérieure ou égale à 70 µm²; et
- une atténuation inférieure ou égale à 0,2 dB/km pour une valeur de longueur d'onde de 1550 nm.

D'autres caractéristiques et avantages de l'invention apparaîtront à la lecture de la description qui suit de divers modes de réalisation de l'invention, donnée à titre d'exemple et en référence aux dessins annexés qui montrent:
- figure 1 une représentation schématique du profil d'indice de consigne d'une fibre monomode à dispersion décalée connue;
- figure 2 une représentation schématique du profil d'indice d'une fibre selon l'invention

La figure 1 a déjà été commentée.

### Exemple

L'invention propose d'ajouter un anneau dans un profil d'indice en gaussienne avec piédestal. La figure 2 montre une représentation schématique d'une fibre selon l'invention. La fibre de la figure présente un coeur de fibre avec une partie de gaussienne, pour des rayons inférieurs à a_{1,} dans laquelle l'indice varie entre n₁ = 11.10⁻³ et n₂ = 1,5.10⁻³. a₁ est compris entre 2,5 et 4 µm. Autour de cette gaussienne, la fibre présente un piédestal, d'indice n₂ sensiblement constant, entre les valeurs de rayons a₁ et a₃; a₃ vaut deux à trois fois a₁.

Autour de ce piédestal, l'invention présente un anneau; celui-ci est séparé du piédestal par une partie annulaire, entre les rayons a₃ et a₄, d'indice n₄ inférieur à celui du piédestal, et par exemple d'indice inférieur à celui de la gaine nₛ; une valeur de l'ordre de 0,5.a₁ pour a₄ - a₃ fournit de bons résultats. Plus généralement, une valeur entre 0,3 et 0,8 fois a₁ est appropriée. On pourrait aussi choisir une partie annulaire d'indice n₄ superieur ou égal à celui de la gaine nₛ.

On prévoit ensuite selon l'invention l'anneau, qui présente un indice n₃ supérieur à celui de la gaine n_{S} et à celui de la partie annulaire n₄. Cet anneau présente par exemple un indice n₃ de 4.10⁻³, et s'étend sur les rayons compris entre a₄ et a_{5,} avec a₅ - a₄ ayant une valeur de l'ordre de 0,5.a₁. Plus généralement, une valeur de a₅ - a₄ entre 0,3 et 0,8 fois a₁ est appropriée.

Autour de cet anneau s'étend la gaine d'indice n_{S}; on peut aussi prévoir juste avant la gaine, notamment si ceci facilite la fabrication de la fibre, une deuxième partie annulaire d'indice n₅ inférieur à celui de la gaine nₛ, et d'indice n₅ inférieur à l'indice n₃ de l'anneau. Cet indice n₅ peut être supérieur ou inférieur à l'indice n₄ entre le piédestal et l'anneau.

L'invention améliore les caractéristiques de transmission des fibres de l'art antérieur; car elle permet toutefois de faire augmenter la valeur λ₀ pour laquelle la dispersion chromatique est nulle; à titre de comparaison, on peut considérer une fibre optique présentant un profil d'indice classique en gaussienne avec piédestal, comme celle de la figure 7 de EP-A-0 789 257. Une telle fibre présente les caractéristiques suivantes :
λ₀ =1582 nm;
diamètre de mode : 10,1 µm;
longueur d'onde de coupure: 1690 nm.

En comparaison, selon l'invention, l'ajout d'un anneau comme sur le profil de la figure 2 permet de réduire l'atténuation de 0,01 dB/km à 1550 nm, de réduire la longueur d'onde de coupure et d'augmenter l'aire efficace de 10 µm².

Dans l'exemple présenté, les indices n₄ et n₅ sont égaux à l'indice nₛ de la silice et égaux entre eux. L'invention peut aussi être mise en oeuvre avec des valeurs des indices n₄ et n₅ différentes les unes des autres, et supérieures ou égales à l'indice de la gaine n_{S}.

Bien entendu, la présente invention n'est pas limitée aux exemples et modes de réalisation décrits et représentés, mais elle est susceptible de nombreuses variantes accessibles à l'homme du métier.

## Revendications

1. Fibre optique monomode à dispersion décalée, présentant
- une gaine avec un indice (nₛ) donné,
- un coeur de fibre présentant un profil d'indice en gaussienne avec piédestal,
caractérisée en ce que le profil d'indice du coeur de fibre présente un anneau externe d'indice (n₃) supérieur à celui de la gaine (nₛ).

2. Fibre selon la revendication 1 telle que l'indice (n₃) dudit anneau est supérieur ou égal à celui (n₂) du piédestal.

3. Fibre selon la revendication 2 telle que l'indice (n₃) dudit anneau est compris entre 1 et 6. 10⁻³.

4. Fibre selon l'une des revendications 1 à 3 telle que l'indice (n₁) le plus élevé de la partie du coeur en gaussienne est supérieur ou égal à 9,5. 10⁻³.

5. Fibre selon l'une des revendications 1 à 4 telle que l'indice (n₂) dudit piédestal est supérieur à celui (nₛ) de la gaine.

6. Fibre selon la revendication 5 telle que l'indice (n₂) dudit pédestal est compris entre 1 et 3. 10⁻³.

7. Fibre selon l'une des revendications 1 à 6 telle que ledit anneau présente une épaisseur (a₅ - a₄) comprise entre 0,3 et 0,8 fois le rayon (a₁) de la partie du coeur en gaussienne.

8. Fibre selon l'une des revendications 1 à 7 telle que l'indice (n₄) entre ledit piédestal et ledit anneau est inférieur ou égal à celui (nₛ) de la gaine.

9. Fibre selon la revendication 8 telle que l'indice (n₄) entre ledit piédestal et ledit anneau est compris entre 0 et -0.5, 10⁻³.

10. Fibre selon l'une des revendications 1 à 9 telle que la partie de la fibre entre ledit piédestal et ledit anneau présente une épaisseur (a₄ - a₃) comprise entre 0,3 et 0,8 fois le rayon (a₁) de la partie du coeur en gaussienne.

11. Fibre selon l'une des revendications 1 à 10 telle qu'elle présente entre ledit anneau externe et la gaine une partie annulaire d'indice (n_{c}) inférieur ou égal à l'indice (n₃) dudit anneau externe et à l'indice (nₛ) de la gaine.

12. Fibre selon la revendication 11 telle que ledit indice (n_{c}) est compris entre 0 et -0,5. 10⁻³.

13. Fibre selon l'une des revendications 1 à 12 telle que la valeur de la longueur d'onde pour laquelle la dispersion chromatique s'annule est supérieure ou égale à 1565 nm.

14. Fibre selon la revendication 13 telle que la valeur de la longueur d'onde pour laquelle la dispersion chromatique s'annule est supérieure ou égale à 1585 nm.

15. Fibre selon l'une des revendications 1 à 14 telle qu'elle présente une surface effective supérieure ou égale à 70 µm².

16. Fibre selon l'une des revendications 1 à 15 telle qu'elle présente une atténuation inférieure ou égale à 0,2 dB/km pour une valeur de longueur d'onde de 1550 nm.
